# EUROPÄISCHE PATENTSCHRIFT

(11) **EP 1 298 039 B1**
(45) Veröffentlichungstag und Bekanntmachung des Hinweises auf die Patenterteilung: **29.08.2007**
(21) Anmeldenummer: 02021054.8
(22) Anmeldetag: 20.09.2002
(51) Int. Cl.: B62D 29/04, B66F 9/06, B62D 21/16, B62D 21/00

(54) **Rahmen für eine mobile Arbeitsmaschine**
Chassis for industrial truck
Châssis pour véhicule industriel

(30) Priorität: 01.10.2001 DE 10148456
(43) Veröffentlichungstag der Anmeldung: 02.04.2003
(73) Patentinhaber: STILL S.A.R.L., 77100 Meaux (FR)
(72) Erfinder: Fortin, Dominique, 60160 Montataire (FR); Bimont, Cyril, 60940 St Vaast-Angicourt (FR); Alegre, Jean-Pierre, 60150 Thourotte (FR); Garcia, David, 60500 Chantilly (FR)
(74) Vertreter: Lang, Michael

(56) Entgegenhaltungen:
- EP-A- 0 738 651
- DE-A- 10 013 079
- US-A- 5 558 368

## Beschreibung

Die Erfindung betrifft ein Flurförderzeug mit einem Fahrzeugrahmen, das einen Antriebsteil und einen mittels eines Hubzylinders relativ zu dem Antriebsteil anhebbaren Lastteil aufweist.

Bekannte gattungsgemäße Flurförderzeuge weisen in der Regel einen Fahrzeugrahmen aus Stahlblech auf, an dem dann je nach Bedarf zusätzliche Stahlteile wie beispielsweise ein Lastaufnahmemittel, eine Fahrerplattform und ähnliches angebracht werden.

Die Stahlbauweise erfordert komplexe Produktionsanlagen und einen aufwändigen Werkzeugbau. Da die Entwicklung in diesem Bereich sehr ausgereift ist, kann mit dem aktuell genutzten Werkstoff Stahl keine Verbesserung mehr in Hinsicht auf eine einfachere Produktion erwartet werden.

Der Erfindung liegt daher die Aufgabe zugrunde, einen Fahrzeugrahmen für ein Flurförderzeug zur Verfügung zu stellen, der kostengünstig und mit einem geringen Aufwand herstellbar ist und zusätzliche Vorteile gegenüber Flurförderzeugen des Standes der Technik bietet.

Diese Aufgabe wird erfindungsgemäß dadurch gelöst, dass mindestens ein Teil des Fahrzeugrahmens aus einem Verbundwerkstoff gebildet ist und aus dem Fahrzeugrahmen ein Behälter für Hydraulikflüssigkeit ausgebildet ist, wobei der Behälter für Hydraulikflüssigkeit in unmittelbarer Nähe des Hubzylinders angeordnet ist. Eine Fertigung von Fahrzeugrahmen aus Verbundwerkstoffen ist deutlich weniger aufwändig und daher kostengünstiger als die bisherige Stahlblechfertigung. Gleichzeitig bieten Verbundwerkstoffe aber die gleichen Vorteile, die bei der Verwendung von Stahlrahmen zum Tragen kommen, wie beispielsweise hohe Festigkeiten der selbsttragenden Karosserien. Außerdem können andere Fahrzeugkomponenten an Rahmen aus Verbundwerkstoffen leicht befestigt werden, da schon bei der Herstellung entsprechende Trägerbauteile in den Rahmen integriert werden können. Damit sich die für das Funktionieren des Hubzylinders benötigte Hydraulikflüssigkeit in unmittelbarer Nähe des Hubzylinders befindet, ist es zweckmäßig, wenn aus dem Fahrzeugrahmen ein Behälter für Hydraulikflüssigkeit ausgebildet ist. Der Behälter kann beispielsweise aus einer behälterförmigen Vertiefung des Rahmens unterhalb des Hydraulikzylinders bestehen.

Es ist besonders vorteilhaft, wenn der Verbundwerkstoff von einem faserverstärkten Kunststoff, vorzugsweise glasfaserverstärktem Kunststoff, gebildet ist. Glasfaserverstärkter Kunststoff besitzt einige Eigenschaften, die sich als positiv für einen Fahrzeugrahmen erweisen. Die Fertigung mit diesem Material ist präziser als diejenige mit Stahlblech und erlaubt darüber hinaus eine einfache Formgebung. Schon vor der Formgebung des Rahmens kann die gewünschte Farbe dem Material beigemischt werden, wodurch der Arbeitsgang des Lackierens eingespart werden kann. Durch diese Methode der Farbgebung ist zudem gewährleistet, dass auch bei einem Aufprall keine Farbe mehr absplittern kann, sondern die Farbe immer beibehalten wird.

Zweckmäßigerweise ist an dem Fahrzeugrahmen eine Befestigungsstruktur für ein Trägerelement der Antriebsräder vorgesehen. Die Montage der Antriebsräder kann auf einfache Art erfolgen. Beispielsweise kann eine Halterung für Schrauben bereits bei der Herstellung in den Rahmen integriert werden.

Um bei bestimmten Flurförderzeugen ein Mitfahren der Bedienperson zu ermöglichen, ist er vorteilhaft, wenn an dem Fahrzeugrahmen ein Befestigungselement für eine Fahrerplattform vorgesehen ist. Diese Befestigung kann bereits bei der Fertigung des Fahrzeugrahmens mitberücksichtigt werden.

Ebenso ist es zweckdienlich, wenn an dem Fahrzeugrahmen ein Befestigungselement für eine Stoßstange vorgesehen ist. Somit können Stöße bei Unfällen abgefedert werden und es kommt zu keiner direkten Beschädigung des Rahmens.

Um den Lastteil eines Flurförderzeugs anheben und absenken zu können, wird ein Hubzylinder benötigt. Demnach ist es vorteilhaft, wenn der Fahrzeugrahmen ein Trägerelement für einen Hubzylinder aufweist. Der Hubzylinder kann dann ohne großen Aufwand und mit einer geringen Anzahl an Montagebauteilen direkt an dem Fahrzeugrahmen befestigt werden.

Weitere Vorteile und Einzelheiten der Erfindung werden im Folgenden anhand von in den Zeichnungen dargestellten Ausführungsbeispielen näher erläutert. Hierbei zeigen:
Figur 1 einen Schnitt durch einen erfindungsgemäßen Fahrzeugrahmen,
Figur 2 eine Draufsicht auf einen erfindungsgemäßen Fahrzeugrahmen.

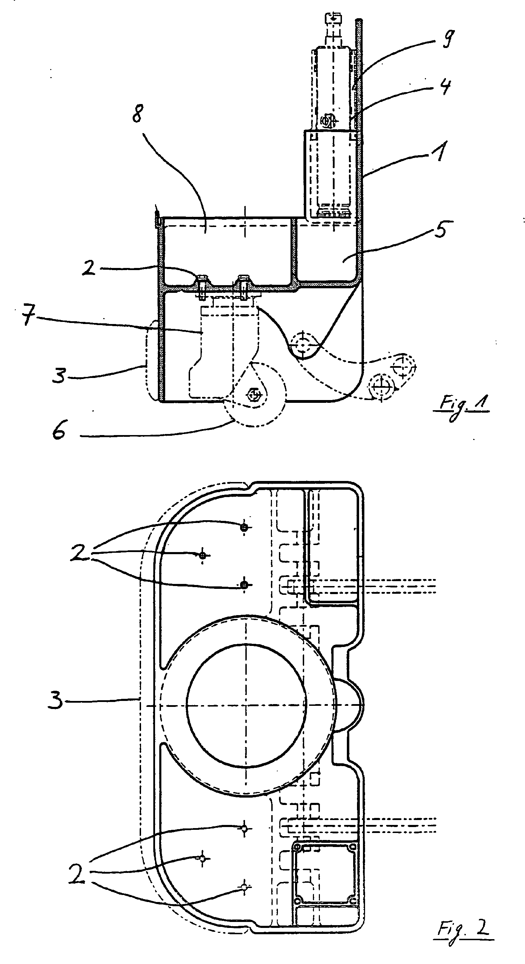

Die Figuren 1 und 2 zeigen einen erfindungsgemäßen Fahrzeugrahmen 1 für ein Flurförderzeug in einem Schnitt und in einer Draufsicht. Die gesamte geschnittene Fläche des aus faserverstärktem Kunststoff hergestellten Fahrzeugrahmens 1 ist schraffiert dargestellt. Der Fahrzeugrahmen 1 wird bei der Herstellung mit von dem jeweiligen Fahrzeugtyp abhängigen diversen Details versehen, die im folgenden beispielhaft erläutert werden.

Im linken Teil des Fahrzeugrahmens 1 befindet sich eine Befestigungsstruktur 2 für ein Trägerelement 7 eines Antriebsrads 6. Der Fahrzeugrahmen 1 enthält zwei Halterungen für Schrauben, an denen das Trägerelement 7 mit dem Antriebsrad 6 befestigt werden kann. Oberhalb der Befestigungsstruktur 2 befindet sich eine Kammer 8 mit Deckel, in welcher ein hier nicht dargestellter Antriebsmotor für das Antriebsrad 6 untergebracht werden kann.

Ebenfalls im linken unteren Teil des Fahrzeugrahmens 1 ist eine Befestigung für eine Stoßstange 3 des Flurförderzeugs vorgesehen. Sie kann beispielsweise mit einer Schraubenverbindung angebracht werden und sorgt für die Abfederung von Stößen bei Unfällen. Außerdem werden die Teile des Fahrzeugrahmens 1 somit vor Beschädigungen geschützt.

Im rechten Teil des Flurförderzeugs, an den sich der hier nicht dargestellte Lastteil mit Lastaufnahmemittel und Stützrädem anschließt, befindet sich ein Hubzylinder 4. Dieser dient dazu, den Lastteil des Flurförderzeugs anzuheben und abzusenken. Um ihn zu befestigen, wurde bei der Herstellung des Fahrzeugrahmens 1 ein Trägerelement 9 in den Fahrzeugrahmen 1 integriert. Bei einer Verbindung des Hubzylinders 4 mit dem Trägerelement 9 schließt der Hubzylinder 4 rechtsbündig an den Fahrzeugrahmen 1 an. Unterhalb des Hubzylinders 4 befindet sich ein Behälter 5 für Hydraulikflüssigkeit. Der Fahrzeugrahmen 1 besitzt eine Trennwand zwischen der Kammer 8 und dem rechten Rand des Fahrzeugrahmens 1, wodurch eine weitere Kammer entsteht, die als Behälter 5 für die Hydraulikflüssigkeit genutzt wird. Die Hydraulikflüssigkeit befindet sich so in unmittelbarer Nähe des Hubzylinders 4 und muss nicht über längere Wege geleitet werden.

Aufgrund der einfachen Herstellung, bei der durch das Einsparen verschiedener Arbeitsgänge, wie z.B. des Lackierens, auch noch die Kosten reduziert werden können, bietet die erfindungsgemäße Anwendung von faserverstärktem Kunststoff als Rahmenmaterial wesentliche Vorteile gegenüber den herkömmlichen Materialien. Dies äußert sich vor allem in der Integration verschiedener Trägerelemente in den Fahrzeugrahmen 1, wodurch spätere Montagearbeiten deutlich verkürzt werden können.

## Patentansprüche

1. Flurförderzeug mit einem Fahrzeugrahmen (1), das einen Antriebsteil und einen relativ zu dem Antriebsteil mittels eines Hubzylinders anhebbaren Lastteil aufweist, **dadurch gekennzeichnet, dass** mindestens ein Teil des Fahrzeugrahmens (1) aus einem Verbundwerkstoff gebildet ist und aus dem Fahrzeugrahmen (1) ein Behälter (5) für Hydraulikflüssigkeit ausgebildet ist, wobei der Behälter (5) für Hydraulikflüssigkeit in unmittelbarer Nähe des Hubzylinders (4) angeordnet ist.

2. Flurförderzeug nach Anspruch 1, **dadurch gekennzeichnet, dass** der Verbundwerkstoff von einem faserverstärkten Kunststoff, vorzugsweise glasfaserverstärktem Kunststoff, gebildet ist.

3. Flurförderzeug nach Anspruch 1 oder 2, **dadurch gekennzeichnet, dass** an dem Fahrzeugrahmen (1) eine Befestigungsstruktur (2) für ein Trägerelement (7) der Antriebsräder (6) vorgesehen ist.

4. Flurförderzeug nach einem der Ansprüche 1 bis 3, **dadurch gekennzeichnet, dass** an dem Fahrzeugrahmen (1) ein Befestigungselement für eine Fahrerplattform vorgesehen ist.

5. Flurförderzeug nach einem der Ansprüche 1 bis 4, **dadurch gekennzeichnet, dass** an dem Fahrzeugrahmen (1) eine Befestigungselement für eine Stoßstange (3) vorgesehen ist.

6. Flurförderzeug nach einem der Ansprüche 1 bis 5, **dadurch gekennzeichnet, dass** der Fahrzeugrahmen (1) ein Trägerelement (9) für einen Hubzylinder (4) aufweist.

## Claims

1. Industrial truck having a vehicle chassis (1), which has a drive part and a load part, which can be raised in relation to the drive part by means of a lifting cylinder, **characterized in that** at least part of the vehicle chassis (1) is formed from a composite material, and a container (5) for hydraulic liquid is formed from the vehicle chassis (1), the container (5) for hydraulic liquid being arranged in the immediate vicinity of the lifting cylinder (4).

2. Industrial truck according to Claim 1, **characterized in that** the composite material is formed from a fibre-reinforced plastic, preferably glass-fibre-reinforced plastic.

3. Industrial truck according to Claim 1 or 2, **characterized in that** a fixing structure (2) for a carrier element (7) of the driving wheels (6) is provided on the vehicle chassis (1).

4. Industrial truck according to one of Claims 1 to 3, **characterized in that** a fixing element for a driver's platform is provided on the vehicle chassis (1).

5. Industrial truck according to one of Claims 1 to 4, **characterized in that** a fixing element for a bumper (3) is provided on the vehicle chassis (1).

6. Industrial truck according to one of Claims 1 to 5, **characterized in that** the vehicle chassis (1) has a carrier element (9) for a lifting cylinder (4).

## Revendications

1. Chariot de manutention avec un châssis de véhicule (1), qui comprend une partie d'entraînement et une partie de chargement pouvant être soulevée par rapport à la partie d'entraînement au moyen d'un vérin de levage, **caractérisé en ce qu'**au moins une partie du châssis de véhicule (1) est formée d'un matériau composite et un réservoir (5) pour un liquide hydraulique est formé à partir du châssis de véhicule (1), dans lequel le réservoir (5) pour un liquide hydraulique est disposé à proximité immédiate du vérin de levage (4).

2. Chariot de manutention selon la revendication 1, **caractérisé en ce que** le matériau composite est formé par une matière plastique renforcée par des fibres, de préférence une matière plastique renforcée par des fibres de verre.

3. Chariot de manutention selon la revendication 1 ou 2, **caractérisé en ce qu'**une structure de fixation (2) pour un élément de support (7) des roues motrices (6) est prévue sur le châssis de véhicule (1).

4. Chariot de manutention selon l'une quelconque des revendications 1 à 3, **caractérisé en ce qu'**un élément de fixation pour une plate-forme de conduite est prévu sur le châssis de véhicule (1).

5. Chariot de manutention selon l'une quelconque des revendications 1 à 4, **caractérisé en ce qu'**un élément de fixation pour un pare-chocs (3) est prévu sur le châssis de véhicule (1).

6. Chariot de manutention selon l'une quelconque des revendications 1 à 5, **caractérisé en ce que** le châssis de véhicule (1) comporte un élément de support (9) pour un vérin de levage (4).
